# EUROPEAN PATENT APPLICATION

(11) **EP 4 398 541 A1**
(43) Date of publication of application: **10.07.2024**
(21) Application number: 22882504.8
(22) Date of filing: 14.09.2022
(51) Int. Cl.: H04L 45/12, H04W 74/04

(54) **NETWORK SCHEDULING METHOD, SYSTEM AND DEVICE**

(30) Priority: 20.10.2021 CN 202111219204; 30.12.2021 CN 202111644958
(71) Applicant: Huawei Cloud Computing Technologies Co., Ltd., Guizhou 550025 (CN)
(72) Inventor: HUANG, Luzhen, Shenzhen, Guangdong 518129 (CN); LU, Youbing, Shenzhen, Guangdong 518129 (CN); YANG, Changpeng, Shenzhen, Guangdong 518129 (CN); SHI, Han, Shenzhen, Guangdong 518129 (CN)
(74) Representative: Pfenning, Meinig & Partner mbB
(86) International application number: PCT/CN2022/118630
(87) International publication number: WO 2023/065893

(57) **Abstract**

This application provides a network scheduling method. The method includes: obtaining service requirement parameters of a service; determining an optimization objective on a network based on the service requirement parameters; then obtaining a plurality of network running parameters in the network, where the network running parameters include communication parameters between two nodes in the network; and then obtaining at least one cluster through division from the network based on the optimization objective and the plurality of network running parameters, where each cluster includes at least one node in the network. The network is automatically divided based on the network running parameters, so that manual optimization of a network architecture based on experience is avoided, and efficiency of network architecture optimization is improved.

## Description

### TECHNICAL FIELD

This application relates to the communication field, and in particular, to a network scheduling method and system, and a device.

### BACKGROUND

Cloud vendors generally use a tree network structure to provide cloud video services. That is, a network includes a specific quantity of central nodes and edge nodes, where a quantity of edge nodes is greater than a quantity of central nodes. Users are connected to the edge nodes through the network to implement access to the cloud video services. There are a large quantity of edge nodes, and all edge nodes need to frequently pull streams from the central nodes to obtain video data and provide the video data for the users. Therefore, in the tree network structure, load pressures of the central nodes are high. This easily causes a server on which the central nodes are located to crash. In addition, the network structure needs to be manually adjusted based on experience.

Therefore, how to optimize the network structure of the cloud video services becomes an urgent problem to be resolved.

### SUMMARY

This application provides a network scheduling method. The method may optimize a network structure in real time.

A first aspect of this application provides a network scheduling method. The method includes: obtaining service requirement parameters of a service; determining an optimization objective on a network based on the service requirement parameters; obtaining a network architecture and a plurality of network running parameters in the network, where the network running parameters include communication parameters between two nodes in the network and network running parameters of the nodes; and obtaining at least one cluster through division from the network based on the optimization objective and the plurality of network running parameters, where each cluster includes at least one node in the network.

The network running parameters are obtained, so that the network architecture is optimized in real time based on the optimization objective, and the network is automatically divided into the at least one cluster, where each cluster includes a plurality of nodes. Therefore, manual optimization of the network architecture based on experience is avoided, and efficiency of network architecture optimization is effectively improved.

In some possible designs, the method further includes: determining a routing path between two nodes in the cluster. After the network is divided into the at least one cluster, a routing path between nodes in a same cluster is optimized, to further optimize the network architecture.

In some possible designs, the method further includes: determining a routing path between a first node of a first cluster and a second node of a second cluster. After the network is divided into the at least one cluster, a routing path between nodes of different clusters is optimized, to further optimize the network architecture.

In some possible designs, the service requirement parameters include one or more of the following: a latency, smoothness, and definition.

In some possible designs, the method further includes: providing a first configuration interface, where the configuration interface is configured to obtain the service requirement parameters entered by a user. The configuration interface is provided to obtain the service requirement parameters entered by the user, to accurately perform cluster division based on a requirement of the user, so as to ensure pertinence of network optimization.

In some possible designs, the communication parameters include one or more of the following: a latency, a packet loss rate, and a jitter.

In some possible designs, the method further includes: obtaining a plurality of historical network running parameters of the network, where the optimization objective, the plurality of network running parameters, and the historical network running parameters are used to obtain the at least one cluster through division from the network. The historical network running parameters of the network are obtained and are used to obtain the at least one cluster through division, a large amount of data for resolving a similar problem is provided, to further improve optimization accuracy.

In some possible designs, the method further includes: providing a second configuration interface, where the second configuration interface is configured to obtain a constraint condition entered by the user, and the optimization objective, the constraint condition, and the plurality of network running parameters are used to obtain the at least one cluster through division from the network. Another configuration interface is provided to obtain the constraint condition entered by the user, to better perform cluster division based on the requirement and a constraint of the user, so as to ensure rationality of network optimization.

A second aspect of this application provides a network scheduling node. The node includes a communication module and a processing module.

The communication unit is configured to obtain service requirement parameters of a service.

The processing unit is configured to determine an optimization objective on a network based on the service requirement parameters.

The communication module is further configured to: obtain a plurality of network running parameters in the network, where the network running parameters include communication parameters between two nodes in the network; and obtain at least one cluster through division from the network based on the optimization objective and the plurality of network running parameters, where each cluster includes at least one node in the network.

In some possible designs, the processing module is further configured to determine a routing path between two nodes in the cluster.

In some possible designs, the processing module is further configured to determine a routing path between a first node of a first cluster and a second node of a second cluster.

In some possible designs, the service requirement parameters include one or more of the following: a latency, smoothness, and definition.

In some possible designs, the communication module is further configured to provide a first configuration interface, where the configuration interface is configured to obtain the service requirement parameters entered by a user.

In some possible designs, the communication parameters include one or more of the following: a latency, a packet loss rate, and a jitter.

In some possible designs, the communication module is further configured to obtain a plurality of historical network running parameters of the network, where the optimization objective, the plurality of network running parameters, and the historical network running parameters are used to obtain the at least one cluster through division from the network.

In some possible designs, the communication module is further configured to provide a second configuration interface, where the second configuration interface is configured to obtain a constraint condition entered by the user, and the optimization objective, the constraint condition, and the plurality of network running parameters are used to obtain the at least one cluster through division from the network.

A third aspect of this application provides a network scheduling system. The system includes a network scheduling node and a network node. The network scheduling node is configured to perform the method provided in the first aspect.

A fourth aspect of this application provides a network scheduling node, including a processor and a memory. The processor is configured to execute instructions in the memory, so that the network scheduling node performs the method provided in any one of the first aspect or the possible designs of the first aspect.

A fifth aspect of this application provides a computer program product including instructions. When the instructions are run by a computer device cluster, the computer device cluster is enabled to perform the method provided in any one of the first aspect or the possible designs of the first aspect.

A sixth aspect of this application provides a computer-readable storage medium, including computer program instructions. A computer program is used to perform the method according to any one of the first aspect or the possible designs of the first aspect.

### BRIEF DESCRIPTION OF DRAWINGS

To describe technical methods in embodiments of this application more clearly, the following briefly describes the accompanying drawings that need to be used in embodiments.
FIG. 1 is a schematic diagram of a conventional tree network structure according to this application;
FIG. 2 is an architectural diagram of network scheduling according to this application;
FIG. 3 is a flowchart of a network scheduling method according to this application;
FIG. 4 is a schematic diagram of an interaction interface according to this application;
FIG. 5(a) is a schematic diagram of cluster division according to this application;
FIG. 5(b) is an architectural diagram of a network according to this application;
FIG. 5(c) is an architectural diagram of another network according to this application;
FIG. 6(a) is an architectural diagram of an edge cluster according to this application;
FIG. 6(b) is an architectural diagram of another edge cluster according to this application;
FIG. 7 is a schematic diagram of a network scheduling node according to this application;
FIG. 8 is a schematic diagram of a network scheduling node according to this application;
FIG. 9 is a schematic diagram of a network scheduling node cluster according to this application;
FIG. 10 is a schematic diagram of another network scheduling node cluster according to this application; and
FIG. 11 is a schematic diagram of another network scheduling node cluster according to this application.

### DESCRIPTION OF EMBODIMENTS

The terms "first" and "second" in embodiments of this application are merely intended for a purpose of description, and shall not be understood as an indication or implication of relative importance or implicit indication of a quantity of indicated technical features. Therefore, a feature limited by "first" or "second" may explicitly or implicitly include one or more features.

To facilitate understanding of embodiments of this application, some terms in this application are first explained and described.

A content distribution network (content distribution network, CDN) is a system including data processing devices that are interconnected in the Internet. The data processing devices cooperate with each other to transparently transmit content (especially a large amount of media content) to an end user. The CDN is a new network content service system, is constructed based on an Internet protocol (Internet protocol, IP) network, and provides content distribution and services based on an efficiency requirement, a quality requirement, and a content order of content access and application.

A tree structure (tree structure) is a network structure, and is a set that includes n (n≥1) finite nodes and has a hierarchical relationship. A network having the tree structure usually includes specific quantities of source nodes, central nodes, and edge nodes, where quantities of these types of nodes sequentially increase. A source node is responsible for recording, transcoding, and the like of data (for example, a media data stream). A central node usually has large bandwidth and a stable network, and is responsible for cross-area scheduling and forwarding of data. An edge node is close to a user side, and is responsible for nearby access of a user.

Data retrieval (data retrieval) means that when data requested by a user is not locally hit in a network (content has not been pre-injected, has not been locally cached, or has expired), the network needs to first access a source node to obtain the content, and then provide a service for the user.

Stream pulling (pull stream) is a process in which a user-side device or an edge node pulls data from another server.

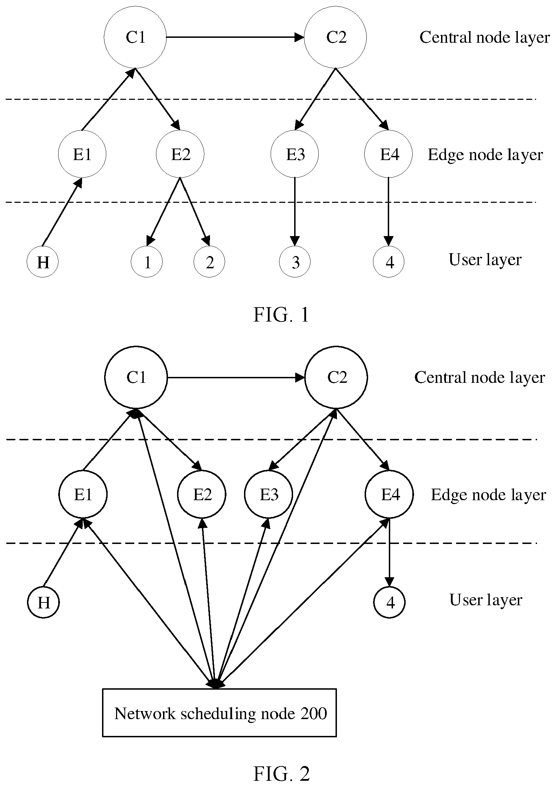

FIG. 1 shows a conventional tree network structure. The tree network structure includes at least two central nodes C1 and C2, and four edge nodes E1, E2, E3, and E4. A user H is a live streamer and accesses the network through E1. After the live streamer H starts live-streaming, a video data upstream performs access through the edge node E1 closest to the live streamer H, and then the edge node E1 pushes the stream to the central node C1 corresponding to the edge node E1.

When an audience requests to watch the live streamer, a request is first sent to an edge node closest to the audience. If a stream of the live streamer exists in the edge node, stream pulling is directly performed, and the audience watches the live streamer. If the stream does not exist in the node, a stream pulling request needs to be sent to a central node corresponding to the edge node.

Both a user 1 and a user 2 access the network through the edge node E2 closest to the two users. When both the user 1 and the user 2 access the network for the first time, a live data stream of the live streamer H does not exist in the edge node E2. Therefore, the stream needs to be pulled from the central node C 1 corresponding to the edge node E2 to obtain the live data stream of the live streamer H.

A user 3 accesses the network through the edge node E3 closest to the user 3, and a user 4 accesses the network through the edge node E4 closest to the user 4. When both the user 3 and the user 4 access the network for the first time, the live data stream of the live streamer H does not exist in the edge nodes E3 and E4. Therefore, the stream needs to be separately pulled from the central node C2 corresponding to the two edge nodes.

When the live data stream of the live streamer H does not exist in the central node C2, the central node C2 needs to pull the stream from C1, to obtain the live data stream of the live streamer H. C2 continuously obtains the live data stream of the live streamer H from C1 until both the user 3 and the user 4 stop requesting to obtain the live data stream of the live streamer H.

It should be noted that, when C2 continuously obtains the live data stream of the live streamer H from C 1, and another user accesses the edge node E3 or E4 corresponding to the central node C2 and requests to obtain the live data stream of the live streamer H, the edge node E3 or E4 may obtain the live data stream of the live streamer H without performing a stream pulling operation.

It can be learned that in the foregoing conventional tree network structure, if an edge node accessed by a user does not cache a data stream requested by the user in advance, the edge node needs to pull the stream from a central node after receiving a request of the user. In this case, as a quantity of access users continuously increases, downlink bandwidth of the edge node also needs to continuously increase. Accordingly, bandwidth costs sharply increase. In addition, the tree network structure is relatively fixed, and a data stream can only be obtained by sending a request to an upper-level node, that is, the network structure cannot be optimized based on network running parameters (such as bandwidth and a latency).

Therefore, for the foregoing problem, this application provides a network scheduling method 100. In the method, network running parameters of a network are collected, and a network topology and a routing path are optimized and adjusted based on a service type.

FIG. 2 is an architectural diagram of network scheduling. The architectural diagram includes at least a network scheduling node 200, two central nodes C1 and C2, four edge nodes E1, E2, E3, and E4, and several users.

The central nodes or the edge nodes are generally one or more network scheduling nodes (for example, a server or a server cluster), and are configured to implement one or more of functions such as forwarding a data read/write request, receiving and sending data, and encoding/decoding the data.

A difference is that the edge node is further configured to perform data transmission with a device at a user layer. Generally, there is a one-to-many correspondence between the central node and the edge nodes, that is, a plurality of edge nodes all communicate with a same central node. Therefore, bandwidth, especially downlink bandwidth, of the central node is greater than that of the edge node. In addition, because the central node needs to respond to data obtaining requests sent by a plurality of edge sites, a computing capability or a storage capability of the central node is stronger than that of the edge node. For example, the central node includes more CPUs or has larger storage space.

Optionally, the central node or the edge node may alternatively be a virtual machine or a container.

The user layer includes terminal devices corresponding to a plurality of users. The terminal device is a device that has one or more capabilities of data transmission, data processing, and display functions, for example, a mobile phone, a television, a tablet computer, a laptop computer, or a smart speaker.

The network scheduling node 200 is configured to collect a plurality of network running parameters, and adjust and schedule a network topology structure and a routing path based on the network running parameters. The network running parameters include two parts. One part is network running parameters of each node, for example, parameters such as bandwidth (uplink bandwidth and downlink bandwidth), central processing unit (central processing unit, CPU) utilization, and memory usage. The other part is communication parameters between nodes, for example, a latency between the nodes, a packet loss rate between the nodes, and a jitter between the nodes.

Optionally, the node may obtain the network running parameters via a detection apparatus of the node. Further, the obtained network running parameters are sent to the network scheduling node 200 in a data transmission manner.

Optionally, a module that is in the network scheduling node 200 and that is configured to collect the plurality of network running parameters may be randomly distributed in the nodes. For example, a parameter collection module may be added to each node, to collect the network running parameters. For another example, the parameter collection module may be added to some nodes, to collect the network running parameters.

Optionally, a module that is in the network scheduling node 200 and that is configured to adjust and schedule the network topology structure and the routing path based on the network running parameters may be deployed based on a cloud service. For example, after network running parameters of a plurality of nodes are obtained, a remote server or server cluster may adjust and schedule the network topology structure and the routing path based on the network running parameters. Servers in the server cluster may not be deployed in a same equipment room.

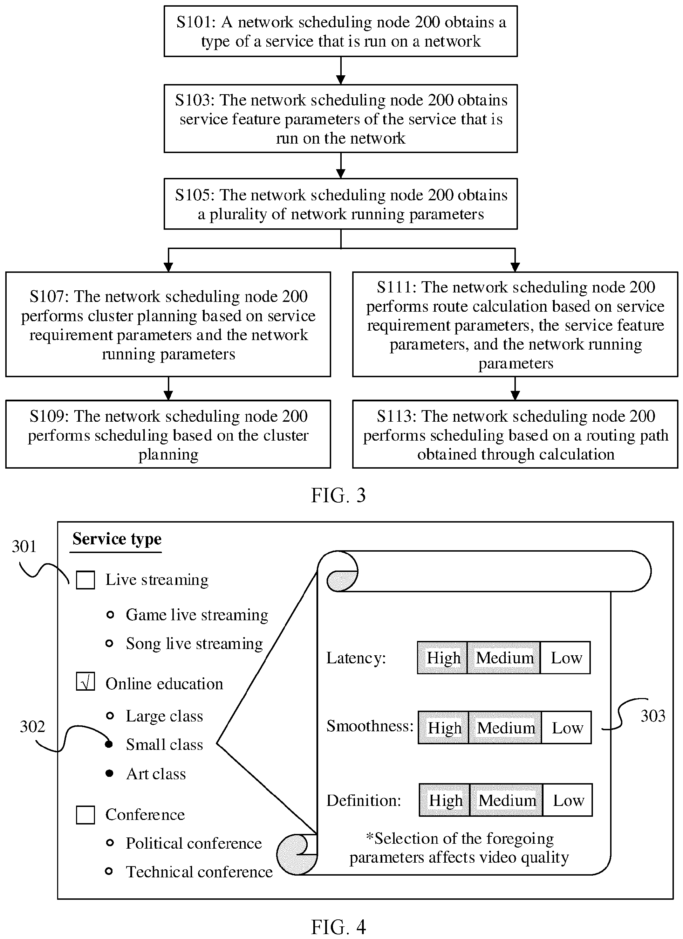

FIG. 3 is a flowchart of a network scheduling method 100.

S101: A network scheduling node 200 obtains a type of a service that is run on a network.

Different types of services have different features. For example, for a video service of an online education type, a cultural foundation class generally requires a low latency and high smoothness, and an art class has a high requirement on image quality based on the foregoing features. Online entertainment games (such as script reasoning games) of a role playing type do not have the high requirement on image quality but have a high requirement on audio smoothness.

In conclusion, the network scheduling node 200 is configured to receive service type indication information sent by a user, where the service type indication information indicates the type of the service that is run on the network. Further, the network scheduling node 200 may determine service requirement parameters of each type of service based on the service type. The service requirement parameters include a low latency, high smoothness, high definition, high stability, and the like. The high smoothness requires a low packet loss rate and a low jitter, and the high definition requires high bandwidth and low bandwidth usage.

Optionally, the service type indication information may also include the service requirement parameters of each type of service.

Optionally, the service type of the user may alternatively be obtained by the network scheduling node 200 based on a historical record of the user.

It should be noted that one network may be configured to run a service of one or more users. That is, some networks may be provided for only a user as a dedicated network, to ensure requirements such as high stability of service running. In addition, when the bandwidth, the network, and the latency all meet requirements, some networks may also be simultaneously provided for a plurality of users to share. Regardless of whether one user occupies one network or the plurality of users occupy one network, there may be one or more corresponding service types.

FIG. 4 provides an interaction interface for setting the service type and the service requirement parameters. The interaction interface includes a level-1 service type selection control 301, a level-2 service type selection control 302, and a service requirement parameter setting control 303. Level-1 service types include a live video service, an online education video service, a conference video service, and the like. Level-2 service types correspond to classification of the level-1 service types. For example, level-2 services corresponding to the live video service include game live streaming, song live streaming, and the like; level-2 services corresponding to the conference video service include a political conference and a technical conference; and level-2 services corresponding to the online education video service include a large class, a small class, the art class, and the like.

Optionally, the user may click the level-1 service type selection control 301 to expand a level-2 service menu thereof, and then click the level-2 service type selection control 302 to select a service type thereof. It should be noted that the user may select one or more service types based on an actual situation.

Further, after selecting any level-2 service type, the user may set service requirement parameters of the service type by using the service requirement parameter setting control 303. The service requirement parameters include one or more of the following parameters: a latency, smoothness, definition, and the like.

Optionally, parameter types for the user to select each has three grades: high, medium, and low. The latency is used as an example, and three grades of a latency parameter correspond to three latency ranges.

Optionally, the user may alternatively set the service requirement parameters by inputting a specified value or value range.

S103: The network scheduling node 200 obtains service feature parameters of the service that is run on the network.

Service feature parameters of each type of service may be determined based on a network service type obtained in S101. The service feature parameters include service geographic distribution, a node type, node distribution, and node running duration distribution.

The service geographic distribution means an area covered by the service and distribution of the coverage area. For example, the live video service is used as an example. A current live streaming service may cover most countries around the world, and live streamers are mainly concentrated in several hot cities. For another example, for a service of a video conference type, a location of a main conference site is relatively fixed, and a location of another person that participates in the conference online is uncertain. During cluster planning (cluster planning) and route calculation (route calculation), the service geographic distribution may be added to optimization calculation as a constraint condition, to improve stability of a core service function. For example, large uplink bandwidth needs to be planned for a city with a large quantity of live streamers, and a backup node or a backup routing path needs to be provided for a main conference site of a video conference.

The node type is a type of a node that is configured to provide a service. Node types include a server, a virtual machine, a container, and the like. Further, the node types further include a server, a virtual machine, a container, and the like of different specifications. Specifically, the servers are used as an example. Processor resources, storage resources, and network resources included in servers of different specifications are not completely the same. Based on different service features, node types required by the services are also different.

The node distribution means distribution of edge nodes. Because the edge nodes have a user access function, the distribution of the edge nodes also represents distribution of users. Correspondingly, distribution of central nodes corresponding to the edge nodes is also affected. For example, in a live streaming service, the node distribution may be determined based on historical geographic distribution of audiences. Further, cluster planning may be performed based on the node distribution.

The node running duration distribution is distribution of duration during which the user accesses an edge node and sends requests such as data read/write. Specifically, after the user accesses the edge node, the edge node may receive the requests, such as data read/write, of the user, and perform an operation such as stream pulling or retrieval based on the requests. Access time of different users is not completely the same. Therefore, some edge nodes may be in an idle state. Nodes with similar running duration are planned to be in a same cluster, so that utilization of computing resources in the nodes may be improved.

S105: The network scheduling node 200 obtains a plurality of network running parameters.

The network scheduling node 200 may obtain the plurality of network running parameters through a collection module deployed on the node. The network running parameters include two parts. One part is network running parameters of each node, for example, parameters such as bandwidth (uplink bandwidth and downlink bandwidth), bandwidth utilization, CPU utilization, and memory usage. The other part is parameters between the nodes, for example, a latency between the nodes, a packet loss rate between the nodes, and a jitter between the nodes.

The latency means time required for transmitting one packet or packet group from one node to another node. The latency includes a sending latency, a propagation latency, a processing latency, and a queuing latency. That is, the latency=the sending latency+the propagation latency+the processing latency+the queuing latency. Generally, the sending latency and propagation latency are mainly considered. When a packet length is large, the sending latency is a main factor. When the packet length is small, the propagation latency is a main factor.

For an ultra-low latency live (low latency live, LLL) service, the latency is required to be less than 800 milliseconds (milliseconds, ms). A real-time communication (real-time communication, RTC) service has a higher requirement on the latency, and the latency is required to be less than 300 ms. For example, the live streaming service with a real-time voice call function belongs to the RTC service.

The bandwidth means an amount of data that can pass through a link in unit time. The unit is bit per second (bit per second, bps), that is, a quantity of bits that may be transmitted per second.

It should be noted that a collection periodicity of the network running parameters may be determined based on a requirement.

Further, after the foregoing network running parameters and service feature parameters are collected, the two types of parameters may be stored in the network scheduling node 200.

S 107: The network scheduling node 200 performs cluster planning based on the service requirement parameters and the network running parameters.

First, there are two types of clusters: a central cluster and an edge cluster. The central cluster includes a plurality of central nodes, and the edge cluster includes at least one central node and at least one edge node. All nodes in the cluster may directly communicate with each other. That is, any two edge nodes in the edge cluster may communicate with each other without using the central node.

Second, the cluster planning means planning a quantity of clusters in the network and a quantity of nodes included in each cluster based on at least one of the service requirement parameters and the plurality of network running parameters.

It should be noted that there is an intersection between the central cluster and the edge cluster, that is, the central node in the central cluster is also a part of some edge clusters.

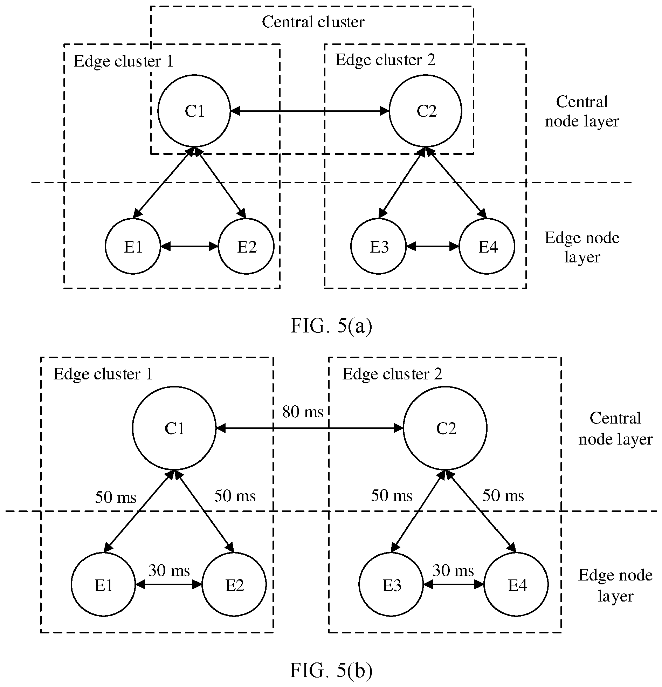

FIG. 5(a) provides a network including two central nodes and four edge nodes. The central cluster includes central nodes C1 and C2. An edge cluster 1 includes the central node C1 and edge nodes E1 and E2, and an edge cluster 2 includes the central node C2 and edge nodes E3 and E4.

Nodes in a same cluster may directly communicate with each other. However, a prerequisite for performing communication is that a communication channel between each node in the cluster and another node needs to be detected. For example, only when parameters such as a latency, a packet loss rate, and a jitter between the edge nodes E1 and E2 meet a communication requirement, the two nodes E1 and E2 may be allowed to communicate with each other.

Optionally, the nodes in the same cluster are connected through a wired cable.

A quantity and distribution of nodes in each cluster may be determined based on the service requirement parameters, such as the low latency, the high smoothness, and the high definition, that are determined based on the service type.

FIG. 5(b) provides a network including a plurality of nodes. The foregoing cultural foundation class is used as an example. This type of class generally requires the low latency (less than 300 ms) because there is a requirement of real-time interaction between a teacher and students. It is assumed that the teacher accesses the edge node E1, and other students access the edge nodes E2, E3, and E4. In addition, it is assumed that uplink/downlink latencies between the nodes are the same. As shown in the figure, in the edge cluster 1, latencies from E1 and E2 to the central node C1 are both 50 ms, and a latency between E1 and E2 is 30 ms. In the edge cluster 2, latencies from E3 and E4 to the central node C2 are both 50 ms, and a latency between E3 and E4 is 30 ms. A latency between two central nodes C1 and C2 in the central cluster is 80 ms. In the network shown in FIG. 5(b), without considering a latency generated when the user accesses the edge node, a latency of communication between the edge nodes through the central node is less than the required 300 ms. That is, the teacher and the students may interact smoothly.

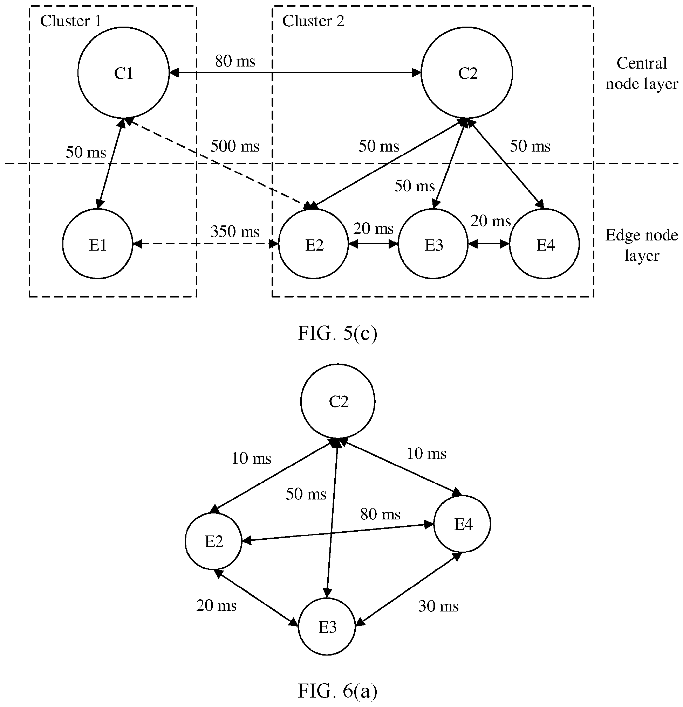

When a communication latency between the edge node E2 and the central node C1 fluctuates greatly, as shown in FIG. 5(c), a latency between the central node C1 and the edge node E2 fluctuates from 50 ms to 500 ms, and the latency between the edge node E1 and the edge node E2 also fluctuates from 30 ms to 350 ms. In this case, a latency of obtaining, by E2, a data stream of E1 directly or through C1 is greater than the required 300 ms. However, the latency between the edge node E2 and the central node C2 is only 50 ms, that is, a latency of obtaining, by the edge node E2, the data stream of the edge node E1 sequentially through the central node C2 and C1 is 180 ms, and is less than the required 300 ms. Therefore, the edge node E2 may be removed from the edge cluster 1, and the node E2 is added to the edge cluster 2, to ensure normal use of a user that accesses from the edge node E2.

Optionally, cluster planning may alternatively be performed based on a neural network algorithm such as deep learning and based on a cluster planning status in historical data. The historical data includes historical network running parameters, historical latency data, historical site fault data, latency distribution data, and the like.

The foregoing describes a kind of cluster planning in which the low latency is used as a constraint. Further, a constraint may be formed based on one or more of requirements such as smoothness, definition, and stability.

Optionally, a plurality of central nodes may be provided in the edge cluster based on a requirement. For example, in a service scenario that requires high stability, such as a large conference, one backup central node may be deployed in the edge cluster, to ensure that when one central node is faulty, the backup central node may be configured to provide a service.

A periodicity for performing cluster planning may be determined based on the requirement, for example, may be performed once at an interval of one hour, or may be performed once when the network scheduling node 200 detects that some parameters are abnormal (for example, the latency fluctuates greatly).

S109: The network scheduling node 200 performs scheduling based on the cluster planning.

After cluster planning is performed, when it is determined that the quantity of clusters or the quantity of nodes in each cluster changes, the network scheduling node 200 delivers cluster planning to each node, and divides the nodes in the network based on the cluster planning.

S111: The network scheduling node 200 performs route calculation based on the service requirement parameters, the service feature parameters, and the network running parameters.

After the quantity of clusters included in the network and the quantity of nodes included in each cluster are determined in S107, routing paths between all nodes in each cluster may be calculated. Specifically, an optimal routing path or a priority order of a plurality of routing paths may be obtained based on an optimization method and based on parameters such as bandwidth of nodes in a same cluster, the latency between the nodes, and the packet loss rate and jitter between the nodes.

FIG. 6(a) shows an edge cluster including the central node C2 and the edge nodes E2, E3, and E4. The following describes a calculation process of an optimal route with the low latency as an optimization objective.

As shown in FIG. 6(a), a latency between the edge nodes E2 and E4 is 80 ms, a latency between the edge nodes E2 and E3 is 20 ms, and a latency between the edge nodes E3 and E4 is 30 ms. That is, when a factor of a latency is considered, a latency of data transmission performed by the edge node E2 through a routing path of E2-E3-E4 is 50 ms, and is less than a latency of data transmission performed by E2 through a routing path of E2-E4.

Similarly, an optimal routing path between the edge node E3 and the central node C2 may also be calculated. Further, three routing paths (E3-C2, E3-E2-C2 and E3-E4-C2) between the edge node E3 and the central node C2 are compared, so that it may be determined that a path with a shortest latency is E3-E2-C2, a path with a second shortest latency is E3-E4-C2, and a path with a longest latency is E3-C2. That is, routing paths between the nodes may be sorted. Based on a sorting status, a backup may be provided when the optimal routing path between the two nodes is faulty. For example, when the edge node E2 is faulty, the edge node E3 cannot obtain data from the central node C2 through E2, the data may be obtained from the central node C2 through the edge node E3.

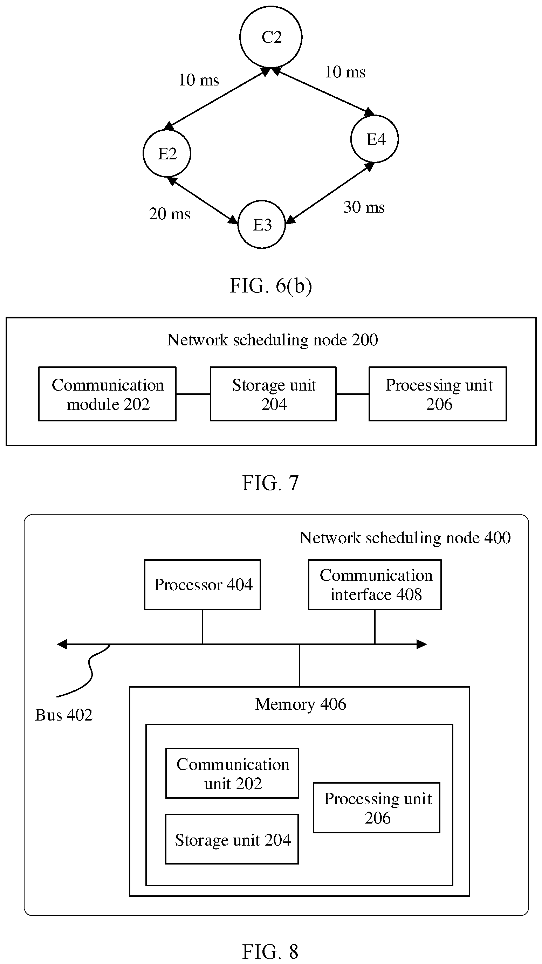

Therefore, based on the foregoing method, an optimal routing path or a priority order of the routing paths between the nodes in the edge cluster may be determined. FIG. 6(b) shows a minimum-latency routing path between the nodes in the edge cluster.

Further, route calculation may be performed based on a plurality of service requirement parameters. Specifically, a target function may be constructed based on two or more of parameters such as the low latency, the high smoothness, the high definition, and a low retrieval cost, and the optimal routing path is obtained based on the optimization method. The retrieval cost is the cost generated by bandwidth consumption of bandwidth data used for pulling a stream from a central node to an edge node.

Optionally, when the target function is constructed based on the plurality of parameters, the target function may be constructed by assigning weights of different values to different parameters. A value of a weight corresponding to each parameter may be determined based on the requirement (for example, the service type).

Optionally, when the foregoing optimization is performed, a constraint function may be further constructed based on the service feature parameters. Specifically, different target functions may be formulated for different clusters based on the service geographic distribution. For example, in the live video service, a live streamer has a high requirement on uplink bandwidth, so that when route calculation is performed on an edge cluster in which an edge node accessed by the live streamer is located, the target function may be constructed mainly based on parameters such as uplink bandwidth and/or bandwidth usage.

Similarly, different target functions may be formulated for different clusters based on the node distribution. For example, a target function of an edge cluster accessed by a user that watches live streaming may be constructed based on parameters such as downlink bandwidth and a latency.

Optionally, the constraint function may be further constructed based on the running duration distribution. For example, in the live video service, access duration of some users is relatively fixed and is longer than that of other users. In this case, running duration of edge nodes corresponding to such users with a longer access time is also longer. Therefore, when to-be-accessed edge nodes are determined for such users, edge nodes of which idle duration meets a user requirement may be selected.

Optionally, the constraint function may be further constructed based on the service requirement parameters. For example, a total latency between the nodes may be constrained to not exceed a fixed value (for example, 400 ms). That is, on the basis of ensuring the latency, the target function is constructed based on a lowest retrieval cost, lowest bandwidth usage, and/or the like. In this possible implementation, a latency of a routing path between some nodes may not be the lowest, but when the constraint function is met, the target function is maximized.

Optionally, after the quantity of clusters included in the network and the quantity of nodes included in each cluster are determined in S107, a routing path between nodes in different clusters may be calculated. For example, in a network including at least three central nodes, a routing path between two central nodes therein may be calculated. For a specific calculation manner, refer to the foregoing calculation manner of the routing path in the same cluster.

The foregoing provides a route calculation policy between some edge clusters. Correspondingly, for a central cluster including three or more central nodes, similar route calculation may also be performed, to implement routing path optimization.

For example, in the conference video service, when the network includes a plurality of central nodes, and a node included in an edge cluster in which one of the central nodes is located corresponds to a main site or a main speaker, that is, most part of data transmission needs to pass through this central node, a constraint function may be constructed, to ensure that optimal paths that are obtained through route calculation and that are between the central nodes in the central cluster all pass through this central node.

It should be noted that an execution frequency of route calculation may be different from a frequency of cluster planning in S107. Generally, route calculation may be more frequent than cluster planning. For example, route calculation may be performed every 1 to 10 minutes.

In addition, S107 and S109 are not performed in a fixed sequence. In other words, S 107 may be performed before S109, or may be performed after S109.

The foregoing shows how to perform cluster planning and route calculation for a specific service type or service requirement. Therefore, for a network dedicated to a specific service, data may be transmitted based on an obtained optimal path. However, for a network used to provide a plurality of services, the foregoing steps need to be first repeated to calculate an optimal route corresponding to each service type. Second, when a service is executed, an optimal route for a service type is selected based on the obtained service type, to use one network to provide services for a plurality of types of services.

S113: The network scheduling node 200 performs scheduling based on a routing path obtained through calculation.

After the optimal route or the plurality of routing paths are obtained through calculation, the network scheduling node 200 delivers a routing optimization policy or the routing paths to the nodes, to provide a routing basis for data transmission between the nodes.

It should be noted that there is no fixed sequence between the execution sequence of the foregoing steps and service access. Specifically, for a network that supports a fixed service type, some of the foregoing steps may be performed before service access. In addition, for a network that supports services that are of a large quantity of types and that are not fixed, some of the foregoing steps may be triggered, during service access, to be performed.

According to the network scheduling method 100 provided in this application, the plurality of network running parameters are collected, so that a network topology structure and the routing path are optimized and scheduled in real time based on the service type, and user experience deterioration caused by a node fault or node parameter fluctuation is effectively avoided. Further, different target functions are set, a service requirement may be met in a targeted manner. For example, the low latency and the low retrieval cost are ensured. In addition, the routing optimization policy obtained through calculation is delivered to the nodes, so that manual adjustment of the routing path based on experience is avoided, and time and costs of operation and maintenance are further reduced while rationality of the routing path between the nodes is ensured.

This application further provides a network scheduling node 200. As shown in FIG. 7, the network scheduling node 200 includes a communication module 202, a storage module 204, and a processing module 206.

The communication module 202 is configured to obtain, in S101 through a configuration interface, a service type entered by a user, and is further configured to obtain the service feature parameters in S103. In S105, the plurality of network running parameters in the network are also obtained by the communication module 202. The communication module 202 is further configured to deliver a cluster planning scheme to the nodes in S109. In addition, an operation of delivering the optimal routing path to the nodes in S113 is also performed by the communication module 202.

Optionally, the communication module 202 is further configured to obtain, in S111 through another configuration interface, a constraint condition entered by the user.

The storage module 204 is configured to store the service type obtained in S101, and is also configured to store the service feature parameters obtained in S103. The plurality of network running parameters and the historical network running parameters obtained in S105 are also stored in the storage module 204. The storage module 204 is further configured to store the cluster planning scheme obtained in S107 and the routing paths obtained in S111.

The processing module 206 is configured to perform an operation of performing cluster planning based on the service requirement parameters and the network running parameters in S107, and is further configured to perform an operation of performing route calculation based on the service requirement parameters, the service feature parameters, and the network running parameters in S111. Specifically, in S111, operations of determining a routing path between two nodes in at least one cluster and determining a routing path between a first node of a first cluster and a second node of a second cluster are both performed by the processing module 206.

Optionally, an operation of performing cluster planning based on the optimization objective, the plurality of network running parameters, and the historical network running parameters is also performed by the processing module 206.

This application further provides a network scheduling node 400. As shown in FIG. 8, the network scheduling node includes a bus 402, a processor 404, a memory 406, and a communication interface 408. The processor 404, the memory 406, and the communication interface 408 communicate with each other through the bus 402. The network scheduling node 400 may be a server or a terminal device. It should be understood that a quantity of processors and memories in the network scheduling node 400 are not limited in this application.

The bus 402 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, the bus is represented by using only one line in FIG. 8. However, it does not mean that there is only one bus or only one type of bus. The bus 402 may include a path for transmitting information between components (for example, the memory 406, the processor 404, and the communication interface 408) of the network scheduling node 400.

The processor 404 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 406 may include a volatile memory (volatile memory), for example, a random access memory (random access memory, RAM). The processor 404 may further include a non-volatile memory (non-volatile memory), for example, a read-only memory (read-only memory, ROM), a flash memory, a hard disk drive (hard disk drive, HDD), or a solid-state drive (solid-state drive, SSD). The memory 406 stores executable program code, and the processor 404 executes the executable program code to implement the foregoing network scheduling method 100. Specifically, the memory 406 stores instructions that are used by a network scheduling system to perform the network scheduling method 100.

The communication interface 403 uses a transceiver module, for example, but not limited to, a network interface card or a transceiver, to implement communication between the network scheduling node 400 and another device or a communication network.

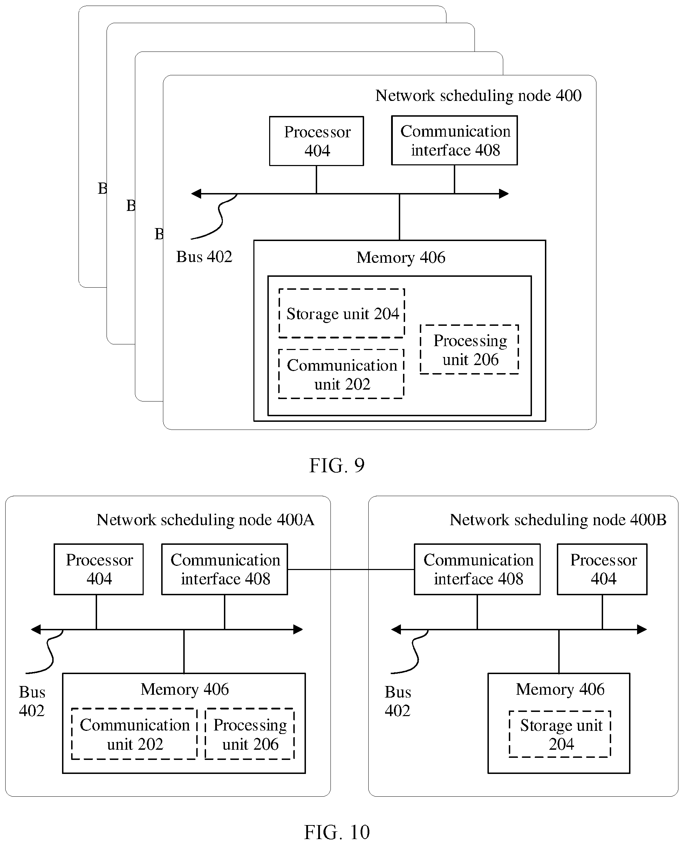

An embodiment of this application further provides a network scheduling node cluster. As shown in FIG. 9, the network scheduling node cluster includes at least one network scheduling node 400. Network scheduling nodes included in the network scheduling node cluster may be all terminal devices, may be all cloud servers, or may be partially cloud servers and partially terminal devices.

In the foregoing three deployment manners of the network scheduling node cluster, the memory 406 in one or more network scheduling nodes 400 in the network scheduling node cluster may store same instructions used by the network scheduling node 200 to perform the network scheduling method 100.

In some possible implementations, one or more network scheduling nodes 400 in the network scheduling node cluster may also be configured to execute some instructions of the network scheduling method 100. In other words, a combination of one or more network scheduling nodes 400 may j ointly execute the instructions used by the network scheduling node 200 to execute the network scheduling method 100.

It should be noted that the memories 406 in different network scheduling nodes 400 in the network scheduling node cluster may store different instructions, to implement some functions of the network scheduling method 100.

FIG. 10 shows a possible implementation. As shown in FIG. 10, two network scheduling nodes 400A and 400B are connected through a communication interface 408. A memory in the network scheduling node 400A stores instructions for implementing functions of the communication module 202 and the processing module 206. A memory in the network scheduling node 400B stores instructions for implementing functions of the storage unit 204. In other words, the memories 406 of the network scheduling nodes 400A and 40B jointly store instructions used by a network scheduling node 200 to perform the network scheduling method 100.

A connection manner between network scheduling nodes shown in FIG. 10 may be based on a consideration that in the network scheduling method 100 provided in this application, a large quantity of network running parameters need to be stored. Therefore, it is considered that a storage function is implemented by the network scheduling node 400B.

It should be understood that functions of the network scheduling node 400A shown in FIG. 10 may also be completed by a plurality of network scheduling nodes 400. Similarly, functions of the network scheduling node 400B may also be completed by the plurality of network scheduling nodes 400.

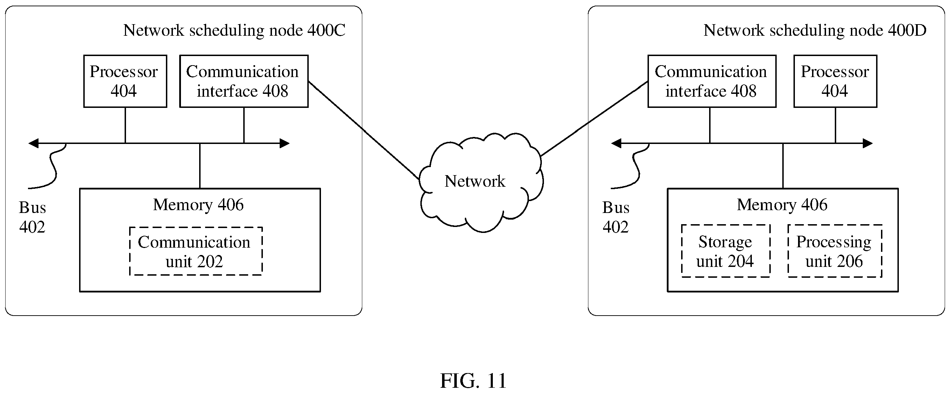

In some possible implementations, one or more of the network scheduling nodes may be connected through a network. The network may be a wide area network, a local area network, or the like. FIG. 11 shows a possible implementation. As shown in FIG. 11, two network scheduling nodes 400C and 400D are connected through a network. Specifically, the network scheduling nodes are connected to the network through communication interfaces in the network scheduling nodes. In this possible implementation, a memory 406 in the network scheduling node 400C stores instructions for executing the communication module 202. In addition, a memory 406 in the network scheduling node 400D stores instructions for executing the storage module 204 and the processing module 206.

A connection manner between the network scheduling nodes shown in FIG. 11 may be based on a consideration that, in the network scheduling method 100 provided in this application, a large quantity of network running parameters need to be stored, and cluster planning and routing path calculation need to be performed. Therefore, it is considered that functions implemented by the processing module 206 and the storage module 204 are executed by the network scheduling node 400D.

It should be understood that functions of the network scheduling node 400C shown in FIG. 11 may also be completed by the plurality of network scheduling nodes 400. Similarly, functions of the network scheduling node 400D may also be completed by the plurality of network scheduling nodes 400.

This application further provides a network scheduling system 500. The network scheduling system 500 includes the network scheduling node 200 and network nodes. Functions of the network scheduling node 200 are described above, and therefore details are not described again. The network nodes correspond to an edge node and a central node in the foregoing network.

It should be noted that the functions of the network scheduling node 200 may be implemented by one computing device or a cluster including a plurality of computing devices.

Optionally, the network scheduling system 500 may include some edge nodes and/or central nodes in the network.

An embodiment of this application further provides a computer-readable storage medium. The computer-readable storage medium may be any usable medium that can be stored by a network scheduling node, or a data storage device, such as a data center, that includes one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions, and the instructions instruct the network scheduling node to perform the foregoing application to the network scheduling node 200 to perform the network scheduling method 100.

An embodiment of this application further provides a computer program product including instructions. The computer program product may be a software or program product that includes the instructions and can run on a network scheduling node or be stored in any usable medium. When the computer program product is run on at least one computer device, the at least one computer device is enabled to perform the foregoing network scheduling method 100.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the protection scope of the technical solutions of embodiments of the present invention.

## Claims

1. A network scheduling method, wherein the method comprises:
obtaining service requirement parameters of a service;
determining an optimization objective on a network based on the service requirement parameters;
obtaining a plurality of network running parameters in the network, wherein the network running parameters comprise communication parameters between two nodes in the network; and
obtaining at least one cluster through division from the network based on the optimization objective and the plurality of network running parameters, wherein each cluster comprises at least one node in the network.

2. The method according to claim 1, wherein the method further comprises:
determining a routing path between two nodes in the cluster.

3. The method according to claim 1 or 2, wherein the method further comprises:
determining a routing path between a first node of a first cluster and a second node of a second cluster.

4. The method according to any one of claims 1 to 3, wherein the service requirement parameters comprise one or more of the following:
a latency, smoothness, and definition.

5. The method according to any one of claims 1 to 4, wherein the obtaining service requirement parameters of a servicecomprises:
providing a first configuration interface, wherein the configuration interface is configured to obtain the service requirement parameters entered by a user.

6. The method according to any one of claims 1 to 5, wherein the communication parameters comprise one or more of the following:
a latency, a packet loss rate, and a jitter.

7. The method according to any one of claims 1 to 6, wherein before the obtaining at least one cluster through division from the network based on the optimization objective and the plurality of network running parameters, the method comprises:
obtaining a plurality of historical network running parameters that are of the network and that are between the nodes, wherein the optimization objective, the plurality of network running parameters, and the historical network running parameters are used to obtain the at least one cluster through division from the network.

8. The method according to any one of claims 1 to 6, wherein before the obtaining at least one cluster through division from the network based on the optimization objective and the plurality of network running parameters, the method comprises:
providing a second configuration interface, wherein the second configuration interface is configured to obtain a constraint condition entered by the user, and the optimization objective, the constraint condition, and the plurality of network running parameters are used to obtain the at least one cluster through division from the network.

9. A network scheduling node, wherein the node comprises:
a communication module, configured to obtain service requirement parameters of a service; and
a processing module, configured to determine an optimization objective on a network based on the service requirement parameters, wherein
the communication module is further configured to: obtain a plurality of network running parameters in the network, wherein the network running parameters comprise communication parameters between two nodes in the network; and obtain at least one cluster through division from the network based on the optimization objective and the plurality of network running parameters, wherein each cluster comprises at least one node in the network.

10. The node according to claim 9, wherein the processing module is further configured to determine a routing path between two nodes in the cluster.

11. The node according to claim 9 or 10, wherein the processing module is further configured to determine a routing path between a first node of a first cluster and a second node of a second cluster.

12. The node according to any one of claims 9 to 11, wherein the service requirement parameters comprise one or more of the following:
a latency, smoothness, and definition.

13. The node according to any one of claims 9 to 12, wherein the communication module is further configured to provide a first configuration interface, and the configuration interface is configured to obtain the service requirement parameters entered by a user.

14. The node according to any one of claims 9 to 13, wherein the communication parameters comprise one or more of the following:
a latency, a packet loss rate, and a jitter.

15. The node according to any one of claims 9 to 14, wherein the communication module is further configured to obtain a plurality of historical network running parameters of the network, wherein the optimization objective, the plurality of network running parameters, and the historical network running parameters are used to obtain the at least one cluster through division from the network.

16. The node according to any one of claims 9 to 15, wherein the communication module is further configured to provide a second configuration interface, the second configuration interface is configured to obtain a constraint condition entered by the user, and the optimization objective, the constraint condition, and the plurality of network running parameters are used to obtain the at least one cluster through division from the network.

17. A network scheduling system, wherein the system comprises a network scheduling node and a network node, and the network scheduling node is configured to perform the method according to any one of claims 1 to 8.

18. A network scheduling node, comprising a processor and a memory, wherein
the processor is configured to execute instructions in the memory, so that the network scheduling node performs the method according to any one of claims 1 to 8.

19. A computer program product comprising instructions, wherein when the instructions are run by a computer device cluster, the computer device cluster is enabled to perform the method according to any one of claims 1 to 8.

20. A computer-readable storage medium, comprising computer program instructions, wherein a computer program is used to perform the method according to any one of claims 1 to 8.
